# EUROPÄISCHE PATENTSCHRIFT

(11) **EP 1 815 969 B1**
(45) Veröffentlichungstag und Bekanntmachung des Hinweises auf die Patenterteilung: **19.10.2011**
(21) Anmeldenummer: 07002666.1
(22) Anmeldetag: 07.02.2007
(51) Int. Cl.: B29C 70/34, B29C 70/08, B29D 24/00

(54) **Flugzeugbauteil sowie Verfahren zur Herstellung eines Flugzeugbauteiles**
Airplane part and method for manufacturing an airplane part
Composant d'aéronef tout comme procédé de fabrication d'un composant d'aéronef

(30) Priorität: 07.02.2006 DE 102006005754; 22.09.2006 DE 102006044842
(43) Veröffentlichungstag der Anmeldung: 08.08.2007
(73) Patentinhaber: AAT Allied Aviation Technologies GmbH, 86874 Tussenhausen-Mattsies (DE)
(72) Erfinder: Grob, Burkhart, Dr. h. c., 86825 Bad Wörishofen (DE); Micheler, Heinz, 86874 Tussenhausen-Mattsies (DE)
(74) Vertreter: Pfister, Stefan Helmut Ulrich

(56) Entgegenhaltungen:
- WO-A-2006/084117
- GB-A- 712 754
- GB-A- 2 339 168
- JP-A- 2 162 032
- US-A- 4 353 947
- US-A1- 2005 126 699
- SUSAN DAGGETT: 'Niche Adhesives for Aerospace Technologies' INTERNET CITATION, [Online] 03 März 2004, Gefunden im Internet: <URL:http://www.writesight.com/writers/sdag gett/article.php?article=663> [gefunden am 2010-11-04]

## Beschreibung

Die Erfindung betrifft ein Flugzeugbauteil sowie ein Verfahren zur Herstellung eines Flugzeugbauteils, insbesondere Flugzeugbauteils. Es ist bekannt, Flugzeugbauteile, wie zum Beispiel Rumpf oder Flügel des Flugzeuges aus Kunststoff zu bauen. Um Gewicht des Flugzeuges einzusparen, ist es bekannt, die Flugzeugbauteile in einer Kunststoffverbundbauweise zu realisieren. Die Kunststoffverbundbauweise weist einen Sandwichaufbau mit einem Außenlaminat, einem Innenlaminat und einem dazwischen angeordneten Kernmaterial aus Wabenmaterial auf. Auch ist es bekannt, Flugzeugbauteile aus Metall, zum Beispiel aus Aluminium, zu fertigen.

Es ist im Motorrennsport bei Kraftfahrzeugen und Motorbooten bekannt, Flugzeugbauteile in Kunststoffverbundbauweise herzustellen.

Aus der Druckschrift US 4,353,947 geht ein Laminatbauteil hervor, das aus einem Außenlaminat und einem Innenlaminat besteht, wobei zwischen den beiden Laminaten ein wabenförmiger Kern angeordnet ist. Zur Verbindung des Innen- und Außenlaminats wird ein Harz verwendet, das in die Hohlkehle zwischen dem Wabenkern und der Laminatschicht hineinfließt und einen Befestigungsmeniskus bildet.

Aus der Druckschrift GB 712,754 geht ein Laminat gemäß den Oberbegriff des Anspruchs 8, hervor, das ein Verfahren zur Herstellung eines Flugzeugbauteils offenbart, wobei die eine Laminatseite mit einem Kupplungsharz bestrichen wird und auf die bestrichene Laminatseite ein Wabenkern aufgesetzt wird. Der Wabenkern ist dazu vorgesehen, eine Membran (Diaphragma) zu bilden. Dies dient dazu, eine bessere Klebefläche für die Schichten zu bilden.

Aus der Druckschrift US 2005 012 66 99 A1 ist ein Verfahren bekannt, mittels welchem ebenfalls ein Laminat mit einer wabenförmigen Struktur hergestellt werden kann. Dazu wird in einem Arbeitsschritt das Flugzeugbauteil währen der Bearbeitung mit Vakuum beaufschlagt.

Des Weiteren ist aus der Druckschrift JP 02162032 ein Verfahren bekannt, welches zur Verbindung von Laminatteilen führt. Auch hier wird das Flugzeugbauteil während des Abbindens des Verbindungsharzes in einen Vakuumbehälter beziehungsweise in eine Vakuumverpackung verpackt und mit Unterdruck beaufschlagt.

Die Erfindung hat es sich zur Aufgabe gemacht, ein Herstellungsverfahren eines Flugzeugbauteils der eingangs genannten Art sowie ein Flugzeugbauteil zu schaffen, das insbesondere bei aus in Kunststoffverbundbauweise erstellten Flugzeugbauteilen eine möglichst hohe Festigkeit bei gleichzeitig möglichst geringem Flugzeugbauteilgewicht erreicht wird, auch bei hohem Differenzdruck stabil bleibt und eine große mechanische Sicherheit und Stabilität aufweist.

Zur Lösung dieser Aufgabe schlägt die Erfindung die Merkmale der unabhängigen Ansprüche 1 und 8 vor. Die Erfindung schlägt ein Verfahren zur Herstellung eines Flugzeugbauteiles in Sandwichbauweise gemäß Anspruch 1 vor, wobei eine Laminatseite mit einem Kupplungsharz bestrichen wird und auf die bestrichene Laminatseite ein Wabenkern aufgesetzt wird und das Kupplungsharz an den Wabenwänden des Wabenkerns hochsteigt und einen Befestigungsmeniskus bildet.

Unter Wabenkern wird ein flächiges Wabenmaterial verstanden, das im Querschnitt gesehen bei einem Kunststoffsandwichaufbau die Kernschicht bildet und deshalb Wabenkern bezeichnet wird. Der Aufbau des Wabenkerns wird später noch beschrieben.

Dabei schlägt die Erfindung ein Flugzeugbauteil gemäß Anspruch 8 vor, welches aus einen zwischen einem Innenlaminat und einem Außenlaminat angeordneten Wabenkern besteht, wobei der Wabenkern eine Vielzahl winklig, insbesondere rechtwinklig zur Laminatfläche orientierte Wabenwände aufweist und im Anlagebereich der Wabenwände an den Innen- beziehungsweise Außenlaminat ein Befestigungsmeniskus, bevorzugt aus Kupplungsharz bestehend, angeordnet ist.

Das erfindungsgemäße Verfahren zur Herstellung eines Flugzeugbauteiles geht davon aus, daß das entsprechende Flugzeugbauteil in einer Negativform hergestellt wird. Die Negativform ist dabei der gewünschten Form des Flugzeugbauteiles, sei es zum Beispiel als Rumpf oder als Flügel, angepaßt.

Bei dem erfindungsgemäßen Verfahren zur Herstellung eines Flugzeugbauteiles wird dabei zunächst in eine Negativform die mit Harz imprägnierte beziehungsweise getränkte Außenlaminatlage eingelegt. Die der Negativform abgewandte Laminatseite wird danach mit dem Wabenkernmaterial verbunden. Vor dem Auflegen des Wabenkerns auf diese Laminatseite wird das Laminat mit einem Kupplungsharz bestrichen. In der Verbindungsebene des Wabenkerns mit dem Laminat kriecht dieses Kupplungsharz, ausgehend von dem Laminat an den Wabenstegen beziehungsweise Wabenwänden, entlang beziehungsweise hoch und bildet in einem Gelierprozeß einen Befestigungsmeniskus, wodurch sich die Klebefläche der eigentlich stumpf an dem Laminat anstehenden Wand erheblich vergrößert und darüber hinaus auch die Wabenzelle versiegelt. Über den Befestigungsmeniskus erfolgt eine mechanische stabile Verbindung vom (Innen- oder Außen-) Laminat zum Wabenkern.

Durch diesen erfindungsgemäßen Prozeß wird die Klebefläche erheblich vergrößert und damit auch die Stabilität erhöht, da sich nicht mehr nur eine linienartige Berührungsfläche der Wabenwand des Wabenkernes auf dem Laminat ausbildet, sondern der gesamte Eckbereich durch den insbesondere hohlkehlig ausgebildeten Befestigungsmeniskus ausgefüllt ist und so eine sehr viel größere Klebe- beziehungsweise Verbindungsfläche entsteht.

Das erfindungsgemäße Verfahren ist daher Ausgangspunkt für die Herstellung eines mechanisch, insbesondere in der Kunststoffverbundbauweise im Handlaminat-Niederdruckverfahren, hergestellten Flugzeugbauteiles, welches erheblich verbesserte mechanische Eigenschaften, insbesondere Stabilität und Festigkeit aufweist und trotzdem ausgesprochen leicht ist.

Es ist klar, daß nach dem erfindungsgemäßen Verfahren Innen- und Außenlaminat mit dem Wabenkern entsprechend verbindbar ist.

Das Laminat ist als Faserverbundwerkstoff ausgebildet, welches durch das geschickte Zusammenfügen einer Matrix und verschiedenen Fasern hergestellt wird. Als Matrix wird dabei zum Beispiel ein Harz, zum Beispiel Epoxydharz oder ähnliches verwendet. An verstärkenden Fasern werden zum Beispiel Glas-, Kohlenstoff- oder auch Aramid- oder andere Kunststofffasern verwendet. Das Fasermaterial liegt dabei zum Beispiel in Matten vor und wird mit dem Harz, der üblicherweise in einem zwei-komponenten System realisiert ist, getränkt.

Besonders vorteilhaft ist es dabei, daß das Fasermaterial des Faserverbundwerkstoffes aus Glas- oder Kohlefaser besteht, da diese Materialien nur geringe Feuchtigkeit aufnehmen. In anderen Anwendungsbereichen ist aber auch der Einsatz von Aramidfasern möglich.

Die auf das Laminat aufgebrachte Kupplungsharzschicht führt zu der hohen Stabilität, da bei der gerade in dem ansonsten sehr fragilen Verbindungsbereich des an der Laminatseite stumpf anstehenden Wabenwand nun eine hohe Festigkeit erzeugt wird.

Geschickterweise wird als Kupplungsharz der gleiche Harz verwendet, wie er auch bei dem Faserverbundwerkstoff eingesetzt wird. Er ist also in einer ersten erfindungsgemäßen Variante identisch mit dem Material der Matrix des Verbundwerkstoffes, zum Beispiel wird hierfür Epoxydharz eingesetzt. Darauf ist die Erfindung aber nicht beschränkt. Es sind natürlich alle anderen Materialien einsetzbar, die ein ähnliches Verhalten zeigen, aber nicht identisch sind mit dem Material der Matrix. Ein Material gleicher Ausgestaltung hat natürlich den Vorteil, daß sich ein besserer Verbund, insbesondere ein einstückiger Verbund, zu dem Laminat herstellen läßt.

Dabei ist gefunden worden, daß es günstig ist, daß das Kupplungsharz in einer Dichte von ca. 50 bis 150 g / m² besonders bevorzugt ca. von 70 bis 100 g / m² erfolgt. Dieser Anteil an Kupplungsharz wurde in Versuchsreihen ermittelt und kombiniert dabei eine optimale Verbindung des Wabenmaterials mit dem Laminat bei zugleich geringem Gewicht.

Zwischen dem Auftragen des Kupplungsharzes und der Weiterverarbeitung des Laminats ist eine Antrocknungszeit vorgesehen, um dem Harz eine ausreichend hohe Viskosität zu geben und damit ein ungleichmäßiges Verlaufen zu verhindern. Es ist beobachtet worden, daß das Ausbilden des Befestigungsmeniskus auf den Kapillareffekt beziehungsweise Adhäsion des Kupplungsharzes an der Wabenwand des Wabenmaterials zurückzuführen ist. Das an der Wabenwand entlang- oder hochsteigende Kupplungsharz führt natürlich zu einem gewissen unregelmäßigen Anteil in der Fläche des Laminats. Eine höhere Viskosität verhindert dabei ein untolerables, ungleichmäßiges Verlaufen, die Viskosität kann je nach Auswahl des Kupplungsharzes über die Antrocknungszeit festgelegt werden.

In einer bevorzugten Variante der Erfindung ist vorgesehen, daß das Kupplungsharz in einer anderen Farbe eingefärbt ist, wie das Laminat. Hierdurch wird dann eine einfache optische Prüfung auf eine gleichmäßige und vollständige Benetzung des Laminats mit dem Kupplungsharz erreicht. Dabei ist zu beachten, daß das Kupplungsharz eine Dicke von wenigen Zehntel Millimetern aufweist. Vorteilhafterweise wird das Kupplungsharz zum Beispiel weiß eingefärbt, wohingegen das Laminat, aufgrund des bevorzugten Kohlenstoff-Fasergewebes, dunkel gehalten ist. Ein solch hoher Kontrast ist bei der optischen Prüfung leicht erkennbar.

Bei einer erfindungsgemäßen Variante ist es auch möglich, auch oder nur die an dem Laminat anliegende Wabenkernseite mit dem Kupplungsharz zu bestreichen. Bei einer solchen Vorgehensweise bildet sich ebenfalls ein Befestigungsmeniskus zwischen der Wabenwand und dem Laminat aus.

Das erfindungsgemäße Verfahren ist nicht darauf begrenzt, daß sich der Wabenkern über der Laminatseite befindet, auch bei einer seitlichen oder gestürzten Anordnung, insbesondere bei der Realisierung eines sandwichartigen Aufbaus, ergibt es sich, daß auch das Kupplungsharz, das auf der oberen Laminatseite aufgetragen ist, nach "unten entlangsteigt" und so einen Befestigungsmeniskus bildet. Das bedeutet, daß der Befestigungsmeniskus unabhängig davon, wie die tatsächliche geometrische Lage zwischen der Wabenwand und dem Laminat ist, sich ausbildet. In jedem Fall steigt das Kupplungsharz an den Wabenwänden entlang, entweder von unten nach oben oder von oben nach unten.

Es ist beschrieben worden, daß bevorzugt die Außenlaminatlage in die Negativform eingelegt wird und dann das Flugzeugbauteil von außen nach innen in der Negativform aufgebaut wird. Es ist klar, daß die Erfindung auch in anderer Weise realisierbar ist, also auch bei einem Einlegen der Innenlaminatschicht in die Negativform des erfindungsgemäßen Verfahrens in gleicher Weise einsetzbar ist.

In einer erfindungsgemäßen Variante ist dabei gefunden worden, daß es günstig ist, an der Außenseite eine Grundierungsschicht auf dem Außenlaminat vorzusehen. Dies wird durch das Einbringen einer entsprechenden gelartigen Deckschicht als erste Schicht (nach einer Antihaftbeschichtung) in der Negativform erreicht. Auf diese Grundierungsschicht wird hernach, wie beschrieben, das Außenlaminat aufgebaut.

Nach dem Ablauf der beschriebenen Antrocknungszeit wird dann vorgesehen, daß der Wabenkern mit seiner geringen Wandstärke in das Laminat eingedrückt und dauerhaft verbunden wird. Der Wabenkern wird dabei mit vergleichsweise niedriger Kraft, zum Beispiel durch Einrollen oder Absaugen, in das Laminat eingedrückt, wo sich dann durch die Adhäsion beziehungsweise Kappilarwirkung der Wabenwand der Befestigungsmeniskus ausbildet.

Der Wabenkern besteht aus einem flächigen Wabenmaterial, wobei die Waben verschiedene Raumformen, zum Beispiel Vier- oder Sechskant aufweisen. Die Wabenwände bestehen zum Beispiel aus Polyamid oder Aramidfasern, die mit Phenylharz getränkt und danach zu Papier verarbeitet sind. Es sind auch Polyamid-Papier-Phenolharz gebundene Wabenkerne bekannt. Diese Materialien zeichnen sich durch eine hohe Steifigkeit bei entsprechend geringem Gewicht aus. Im Schnitt gesehen weisen die einzelnen Waben eine Querschnittsfläche von ca. 20 bis 80 mm², auf. Bevorzugterweise wird ein Wabenkern eingesetzt, der eine Querschnittsfläche der einzelnen Waben von ca. 30 bis 40 mm² besitzt.

Günstigerweise ist vorgesehen, daß sowohl das Außenlaminat (welches gegebenenfalls in der Negativform eingelegt ist) und auch das Innenlaminat jeweils mit Kupplungsharz bestrichen wird und dann in relativ rascher Folge hintereinander der Wabenkern auf das in der Negativform liegende Außenlaminat gelegt wird und gleich anschließend das Innenlaminat auf den bereits ausgelegten Wabenkern.

Durch das Einrollen zur Rückseite wird dann gleichzeitig der Wabenkern mit dem Innen- wie auch mit dem Außenlaminat verbunden, derart, daß die jeweiligen Endbereiche der Wabenwände in die dem Wabenkern zugewandten Kupplungsharzschichten des Innenbeziehungsweise Außenlaminats gedrückt werden.

Abschließend wird der gesamte Sandwichaufbau mit einer Folie luftdicht abgeschlossen und dann mit Vakuum, mit einem Unterdruck von 0,7 bis 0,9 bar beaufschlagt und verpreßt. Die Folie begrenzt dabei im Zusammenwirken mit der Negativform den zu evakuierenden Raum.

In einer vorteilhaften Ausgestaltung der Erfindung ist vorgesehen, daß das Verbinden des Innenlaminats mit dem Wabenkern und des Wabenkerns mit dem Außenlaminat im Vakuum geschieht. Während des Aushärtens wird ein Unterdruck von ca. 0,7 bis 0,9 bar vorgesehen, in welchem das gesamte Flugzeugbauteil liegt. In jeder einzelnen Wabe entsteht damit ein Unterdruck, der sich vorteilhafterweise auf den gesamten Sandwichverband auswirkt. Dabei wird geschickterweise das Vakuum vor einem Verbund der beiden Laminate mit dem Wabenkern angelegt und danach die drei Elemente zusammengefügt. Dabei ist gefunden worden, daß bereits bei einer geringen Dicke, zum Beispiel von 3 Lagen des Faserverbundwerkstoffes, im ausgehärteten Laminat kein Gasdurchgang mehr festzustellen ist und so auch die Luftsäule in einer Wabenzelle unter einem entsprechenden Unterdruck steht. Dabei dient die aufgetragene Kupplungsharzschicht nicht nur zu einer entsprechenden mechanisch belastbaren Verbindung der einzelnen Wabenwände mit dem Außen- beziehungsweise Innenlaminat, sondern dichtet auch die einzelnen Wabenzellen zueinander und auch gegenüber der Umgebung ab.

Es ist dabei möglich, daß der Druck innerhalb der Wabenzelle nach dem Aushärten des Bauteils zwischen 0,1 und 0.9 bar ist.

Es ist gefunden worden, daß ein erfindungsgemäß hergestelltes Flugzeugbauteil selbst bei einem Differenzdruck von mehr als 4 bar stabil bleibt und so eine große mechanische Sicherheit und Stabilität zum Beispiel für den Bau von Flugzeugbauteilen beziehungsweise Flugzeugen zur Verfügung steht.

Zusätzlich zu den bereits ausgeführten Verfahren zur Versiegelung der Wabenkerne wurde die Struktur vor Feuchtigkeit geschützt.

Die Aufgabe wird auch durch ein Bauteil, insbesondere ein Flugzeugbauteil, gelöst, das einen zwischen einem Innenlaminat und einem Außenlaminat angeordneten Wabenkern umfaßt, wobei der Wabenkern eine Vielzahl winklig, insbesondere rechtwinlig zur Laminatfläche orientierte Wabenwände aufweist und im Anlagebereich der Wabenwand an dem Innen- bzw. Außenlaminat ein Befestigungsminiskus, bevorzugt aus Kupplungsharz hergestellt, angeordnet ist.

Der Wabenkern ist günstigerweise ein flächige Wabenmaterial, bevorzugt in einer Dicke von 5 mm bis 50 mm, mit einer Vielzahl von Wabenzellen. Der Wabenkern weist bevorzugt eine Vielzahl von Wabenzellen mit einem Unterdruck von ca. 0,1 bis 0,9 bar auf.

Die Wabenzellen umfassen vorteilhaft Wabenwände aus Polyamid oder Aramidfasern, die mit Phenylharz getränkt sind und zu Papier verarbeitet sind.

Das erfindungsgemäße Herstellungsverfahren eines Flugzeugbauteiles führt zu einem hoch belastbaren und äußerst leichten Flugzeugbauteil. Dabei wird durch einen einfachen Arbeitsschritt, nämlich dem Auftragen des Kupplungsharzes, welches in geeigneter Weise flächig und maschinell erfolgen kann, ein sicherer und effektiver Verbund zwischen den filigranen Wabenwänden des Wabenkernes und dem Innen- beziehungsweise Außenlaminat zur Verfügung gestellt. Durch den verhältnismäßig geringen Mehraufwand des Auftragens des Kupplungsharzes wird daher eine große Wirkung, nämlich eine hohe Stabilität und Dichtigkeit des Flugzeugbauteiles erreicht. Der Wabenkern des Bauteils ist vom Kupplungsharz vorteilhafterweise im wesentlichen versiegelt.

Darüber hinaus bietet das erfindungsgemäße Flugzeugbauteil noch weitere Vorteile. Es werden zum Beispiel keine Materialermüdungen beobachtet. Auch ist das erfindungsgemäße Flugzeugbauteil nicht korrosionsanfällig. Es wird das Ausschlagen von Nieten vermieden, da keine Nieten verwendet werden. Es besteht auch nicht die Gefahr, daß sich Schleichrisse ausbilden.

Neben den erheblich verbesserten statischen Eigenschaften zeichnet sich ein erfindungsgemäßes Flugzeugbauteil aber auch durch seine Wärmeisolierung aufgrund des Sandwichaufbaues wie auch der Schalldämpfung aus. Auch im Reparaturfalle sind Beschädigungen, zum Beispiel der Außenhaut eines Flugzeuges, welche mit dem erfindungsgemäßen Flugzeugbauteil ausgestattet ist, einfach möglich.

Des weiteren umfaßt die Erfindung auch ein Flugzeug mit einer Druckkabine, wobei insbesondere die Druckkabine zumindest teilweise aus einem Flugzeugbauteil wie beschrieben gebildet ist.

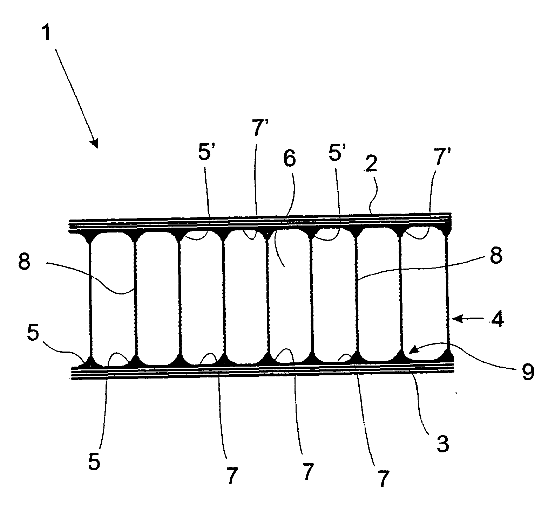

Die Erfindung ist schematisch in der einzigen Zeichnung dargestellt.

Hier wird in einem Schnitt das erfindungsgemäße Flugzeugbauteil gezeigt.

In der einzigen Figur ist das erfindungsgemäße Flugzeugbauteil 1 in einem Vertikalschnitt gezeigt. Die Darstellung entspricht einem Maßstab von ca. 1 : 1.

Das Flugzeugbauteil 1 besteht dabei aus einem Innenlaminat 2, einem Außenlaminat 3 und einem zwischen Innenlaminat 2 und Außenlaminat 3 angeordneten Wabenkern 4.

Das Innen- wie das Außenlaminat 2, 3 bestehen dabei aus einer Mehrzahl von übereinander angeordneten Lagen von Fasermatten, zum Beispiel aus Glas- oder Kohlenstofffasern, die durch eine Matrix miteinander verbunden sind. Als Matrix wird zum Beispiel ein Harz, ein Kunststoff- beziehungsweise Epoxydharz vorgesehen. Innen- wie Außenlaminat 2, 3 sind dabei durchaus mehrlagig realisiert, wobei auch insbesondere die innersten oder auch äußersten Lagen der Laminate durch die Einarbeitung von zusätzlichen Materialien zusätzliche Eigenschaften aufweisen können.

Der Wabenkern 4 besitzt eine Höhe von ca. 5 mm bis 50 mm. Auf die Draufsicht gesehen besteht der Wabenkern 4 aus einer Vielzahl nebeneinander angeordneten vier- oder sechseckig ausgestalteten Wabenzellen 6. Dabei ist die Ausgestaltung der Waben im übrigen beliebig möglich.

Die einzelnen Wabenzellen 6 sind zueinander abgegrenzt durch Wabenwände 8. Die einzelnen Wabenzellen 6 sind durch das Innenlaminat 2 beziehungsweise Außenlaminat 3 abgeschlossen.

Die dem Wabenkern 4 zugewandte Seite des Innenlaminats 2 beziehungsweise des Außenlaminats 3 ist flächig mit einer Schicht von Kupplungsharz 7 bestrichen oder beschichtet. Das Kupplungsharz ist dabei bevorzugt identisch zu dem Matrixmaterial des Verbundwerkstoffes des Innenlaminats 2 beziehungsweise Außenlaminats 3. Natürlich ist es möglich, daneben anderes Material als Kupplungsharz 7 einzusetzen, welches sich zum einen verträglich mit dem Innenlaminat 2 beziehungsweise Außenlaminat 3 verbinden läßt und andererseits eine ausreichende, möglichst hohe mechanische Stabilität gewährleistet.

Die Wabenwand 8 ist unter Aufwendung einer gewissen Kraft auf das jeweilige Laminat angedrückt, derart, daß der Endbereich 9 der Wabenwand 8 in die Schicht vom Kupplungsharz 7 eingedrückt wird. Dabei werden selbstverständlich alle Endbereiche der Wabenwände 8 in gleicher Weise in das Kupplungsharz 7 eingedrückt. Dabei ist das Kupplungsharz 7 noch nicht vollständig ausgehärtet, aber auch nicht mehr so flüssig wie kurz nach dem Auftragen. Durch eine entsprechende Antrocknungszeit nach dem Aufbringen des Kupplungsharzes kann die Viskosität eingestellt werden und somit die Ausgestaltung der Befestigungsmeniskusse 5,5', die sich seitlich neben der Wabenwand 8 im Endbereich 9 der Wabenwand bilden. Es ist dabei günstig, daß das Kupplungsharz 7 von selbst an der Wabenwand 8 nach oben beziehungsweise unten steigt, sich also entlang bewegt oder entlang steigt und so die Ausbildung des Befestigungsmeniskus ergibt und eine mechanisch belastbare Verbindung ergibt.

Gleichzeitig dichtet das Kupplungsharz 7 auf den Spaltbereich zwischen dem unteren Rand der Wabenwand 8 zum jeweiligen Laminat 2, 3 gasdicht ab. Die einzelnen Wabenzellen 6 sind daher voneinander unabhängig und gasdicht.

Gemäß dem erfindungsgemäßen Herstellungsverfahren ist dabei gefunden worden, daß sich die Befestigungsmeniskusse 5,5' sowohl an dem in diesem Ausführungsbeispiel unten liegenden Außenlaminat 3 wie auch dem oben angeordneten Innenlaminat 2 (hier Befestigungsmeniskus 5') ausbildet.

## Patentansprüche

1. Verfahren zur Herstellung eines Flugzeugbauteils (1), wobei eine einer Negativform eines entsprechenden Flugzeugbauteils abgewandte Laminatseite eines Außenlaminats mit Kupplungsharz (7) bestrichen wird und ein Innenlaminat (2) auf der dem Wabenkern (4) zugewandten Seite mit Kupplungsharz (7) bestrichen wird und auf die bestrichenen Laminatseite ein Wabenkern (4) aufgesetzt wird
oder
wobei ein Kupplungsharz (7) auf die zwei gegenüberliegenden Seiten eines Wabenkerns (4) bestrichen wird und anschließen die bestrichenen Seiten auf die Laminatseiten eines Außen- und Inneniaminats gelegt werden,
wobei das Kupplungsharz (7) an den Wabenwänden (8) des Wabenkerns (4) entlang steigt und einen Befestigungsmeniskus (5) bildet, das Bauten (1) mit einer Folie luftdicht abgeschlossen und mit Unterdruck zwischen 0,7 bar bis 0,9 bar beaufschlagt, ausgehärtet und insbesondere verpresst wird und der Unterdruck innerhalb der Wabenzelle nach dem Aushärten zwischen 0,1 bis 0,9 bar ist und das Außen- und innen laminat mit drei Fasermattenlagen insbesondere aus Glasfasern oder Kohlefasern hergestellt werden.

2. Verfahren nach einem der vorhergehenden Ansprüche, **dadurch gekennzeichnet, dass** die Fasermattenlagen zur Herstellung eines faserverstärkten Kunststoffes mit einem zwei-Komponenten-Kunststoffsystem, bevorzugt einem Epoxydharz, getränkt werden.

3. Verfahren nach einem der vorhergehenden Ansprüche, **dadurch gekennzeichnet, dass** als Kupplungsharz (7) ein mit dem Harz des faserverstärkten Kunststoffes des Außenlaminats (3) und/oder Innenlaminats (2) identisches Harz, insbesondere Epoxydharz, verwendet wird.

4. Verfahren nach einem der vorhergehenden Ansprüche, **dadurch gekennzeichnet, dass** das Kupplungsharz (7) in einer Dichte von circa 50 g/m² bis 150 g/m² besonders bevorzugt von 70 g/m² bis 100 g/m² aufgetragen wird und/oder eine Antrocknungszeit des Kupplungsharzes (7) nach Auftragen auf eine Laminatseite abgewartet wird.

5. Verfahren nach einem der vorhergehenden Ansprüche, **dadurch gekennzeichnet, dass** das Kupplungsharz mit einer anderen Farbe als das Laminat (2, 3), bevorzugt mit hohem Kontrast eingefärbt wird, insbesondere bei einem schwarzen Laminat mit einer weißen Farbe und dass das Kupplungsharz (7) anschließend auf die Laminatseite aufgetragen wird.

6. Verfahren nach einem der vorhergehenden Ansprüche, **dadurch gekennzeichnet, dass** das Kupplungsharz zumindest teilweise auf bis zu senkrechten Seiten aufgetragen wird.

7. Verfahren nach einem der vorhergehenden Ansprüche, **dadurch gekennzeichnet, dass** der Wabenkern (4) in die mit Kupplungsharz (7) bestrichene Laminatseite bevorzugt durch Einrollen oder Absaugen eingedrückt wird und/oder auf eine Negativform nach einer Antihaftbeschichtung eine Grundierungsschicht aufgetragen wird, auf die das Außenlaminat (3) aufgebaut wird.

8. Flugzeugbauteil, umfassend einen zwischen einem Innenlaminat (2) und einem Außenlaminat (3) angeordneten Wabenkern (4), wobei der Wabenkern (4) eine Vielzahl winklig, insbesondere rechtwinklig zur Laminatfläche orientierte Wabenwände (8) aufweist **dadurch gekennzeichnet, dass** im Anlagebereich der Wabenwand (8) an dem Innen- beziehungsweise Außenlaminat (2, 3) ein Befestigungsmeniskus (5), aus Kupplungsharz (7) angeordnet ist und der Wabenkern (4) eine Vielzahl von Wabenzellen (6) umfasst, die während des Aushärtens mit einem Unterdruck von 0,7 bis 0,9 bar beaufschlagt wurden und die einen Unterdruck von ca. 0,1 bis 0,9 bar aufweisen und das Außenlaminat (3) und das Innenlaminat (2) mindestens drei Faserlagen, insbesondere Glasfaser- oder Kohlenstofffaserlagen, aufweist.

9. Flugzeugbauteil nach Anspruch 9, **dadurch gekennzeichnet, dass** der Wabenkern (4) ein flächiges Wabenmaterial, bevorzugt in einer Dicke von 5 mm bis 50 mm, mit einer Vielzahl von Wabenzellen (6) ist und/oder der Wabenkern vom Kupplungsharz im Wesentlichen versiegelt ist.

10. Flugzeugbauteil nach einem der vorhergehenden Ansprüche 9 und 10, **dadurch gekennzeichnet, dass** die Wabenzellen (6) Wabenwände (8) aus Polyamid oder Aramidfasern umfassen, die mit Phenylharz getränkt sind und zu Papier verarbeitet sind.

11. Flugzeugbauteil nach einem der vorhergehenden Ansprüche 9 bis 11, **dadurch gekennzeichnet, dass** das Kupplungsharz (7) eine andere Farbe als das Laminat, bevorzugt eine weiße Farbe aufweist.

12. Flugzeug mit einer Druckkabine, wobei die Druckkabine zumindest teilweise aus einem Flugzeugbauteil nach den Ansprüchen 9 bis 12 gebildet ist.

## Claims

1. Method for producing an aircraft component (1), wherein a laminate side of an exterior laminate opposite a negative mould of a corresponding aircraft component is coated with connecting resin (7), and an interior laminate (2) on the side facing the honeycomb core (4) is coated with connecting resin (7), and a honeycomb core (4) is put on the coated laminate surfaces,
or
wherein a connecting resin (7) is spread on the two opposing sides of a honeycomb core (4), and, after that, the coated sides are put on the laminate sides of an exterior and interior laminate,
wherein the connecting resin (7) mounts along the honeycomb walls (8) of the honeycomb core (4) and forms an attachment meniscus (5), the component (1) is sealed airtight with a film and is pressurized, cured and in particular pressed with low pressure between 0.7 and 0.9 bar, and the low pressure within the honeycomb cell is after curing between 0.1 and 0.9 bar, and the exterior and interior laminate are produced with three layers of fiber mats, in particular of glass fiber or carbon fiber.

2. Method according to one of the preceding claims, **characterized in that** the layers of fiber mats are soaked with a two component plastic system, preferably an epoxy resin, for producing a fiber reinforced synthetic material.

3. Method according to one of the preceding claims, **characterized in that** as connecting resin (7) a resin identical with the resin of the fiber reinforced synthetic material of the exterior laminate (3) and/or interior laminate (2), in particular epoxy resin, is used.

4. Method according to one of the preceding claims, **characterized in that** the connecting resin (7) is spread with a thickness of roughly 50 g/m2 to 150 g/m2, in particular preferred from 70 g/m2 to 100 g/m2, and/or a surface-drying time of the connecting resin (7) after spreading on a laminate surface is waited for.

5. Method according to one of the preceding claims, **characterized in that** the connecting resin is dyed with another color than the laminate (2, 3), preferably with high contrast, in particular, when the laminate is black, with white color, and that the connecting resin (7) is spread after that on the laminate surface.

6. Method according to one of the preceding claims, **characterized in that** the connecting resin is spread at least partly on sides up to vertical.

7. Method according to one of the preceding claims, **characterized in that** the honeycomb core (4) is pressed in the laminate surface coated with connecting resin (7) preferably by rolling in or sucking out, and/or a negative mould is coated, after an anti-adhesive coating, with a primary layer, on which the exterior laminate (3) is built.

8. Aircraft component, comprising a honeycomb core (4) arranged between an interior laminate (2) and an exterior laminate (3), wherein the honeycomb core (4) has a number of honeycomb walls orientated angular, in particular rectangular, to the laminate surface, **characterized in that** in the contact area of the honeycomb wall (8) on the interior and exterior laminate (2,3), respectively, an attachment meniscus (5) of connecting resin (7) is arranged, and the honeycomb core (4) comprises a number of honeycomb cells (6) that have been pressurized during curing with a low pressure of 0.7 to 0.9 bar, and that have a low pressure of roughly 0.1 to 0.9 bar, and the exterior laminate (3) and the interior laminate (2) have at least three layers of fibers, in particular layers of glass fibers or carbon fibers.

9. Aircraft component according to claim 9, **characterized in that** the honeycomb core (4) is a plane honeycomb material, preferably in a thickness of 5 mm to 50 mm, with a number of honeycomb cells (6), and/or the honeycomb is sealed essentially by the connecting resin.

10. Aircraft component according to one of the preceding claims 9 and 10, **characterized in that** the honeycomb cells (6) comprise honeycomb walls (8) of polyamide or aramid fibers soaked with phenyl resin and made into paper.

11. Aircraft component according to one of the preceding claims 9 to 11, **characterized in that** the connecting resin (7) has another color than the laminate, preferably white color.

12. Aircraft with a pressure cabin, wherein the pressure cabin is formed at least partly of an aircraft component according to the claims 9 to 12.

## Revendications

1. Procédé de fabrication d'éléments de construction aéronautique (1) basé sur l'application d'une résine d'adhérence (7) sur la surface d'un matériau stratifié extérieur située du ctté opposé à la forme négative de l'élément de construction aéronautique à fabriquer et pareillement basé sur l'application d'une résine d'adhérence (7) sur la surface d'un matériau stratifié intérieur (2) faisant face à un noyau alvéolé (4), le tout suivi par la mise en adhérence des surfaces du matériau stratifié avec le noyau alvéolé (4) grbce aux couches de résine appliquées sur les matériaux stratifiés ou
basé sur l'application d'une résine d'adhérence (7) sur les deux faces opposées d'un noyau alvéolé (4) suivi par la mise en contact de ces couches de résine avec les faces des matériaux stratifiés intérieur et extérieur, ceci résultant en une couverture des parois (8) des alvéoles (4) par la résine d'adhérence (7) formant un ménisque de fixation (5), au cours de ce procédé l'élément de construction (1) est isolé hermétiquement de l'air par un film et soumis à une pression basse comprise entre 0,7 bar et 0,9 bar tandis que les matériaux intérieur et extérieur est fabriqué de trois couches en fibres et en particulier en fibres de verre ou de carbone.

2. Procédé selon la revendication précédente, **caractérisé en ce que** les couches des matrices de fibres de verre sont imbibées d'une substance plastique constituée de deux composants et de préférence d'une résine époxy afin de fabriquer un matériau plastique renforcé par fibres.

3. Procédé selon une des deux revendications précédentes, **caractérisé en ce que** la résine d'adhérence (7) est une résine identique à celle utilisée pour la fabrication du matériau plastique renforcé par des fibres du matériau stratifié extérieur (3) et/ou du matériau stratifié intérieur (2), et est en particulier de la résine époxy.

4. Procédé selon une des revendications précédentes, **caractérisé en ce que** la résine d'adhérence (7) est appliquée avec une densité comprise entre environ 50 g/m2 et 150 g/m2 et de préférence entre 70 g/m2 et 100 g/m2 et/ou **en ce qu'**un temps de séchage des surfaces des couches de résine d'adhérence (7) appliquées sur le matériau stratifié est respecté.

5. Procédé selon une des revendications précédentes, **caractérisé en ce que** la résine d'adhérence est colorée avec une couleur différente de celle du matériau stratifié (2, 3) et de préférence de fagon à produire un fort contraste, par exemple une couleur blanche pour un matériau stratifié noir, et **en ce que** la résine d'adhérence (7) est ensuite appliquée sur la face du matériau stratifié.

6. Procédé selon une des revendications précédentes, **caractérisé en ce que** la résine d'adhérence est appliquée au moins partiellement sur les parois verticales.

7. Procédé selon une des revendications précédentes, **caractérisé en ce que** le noyau alvéolé (4) est enfoncé par un mouvement rotatif ou par pression dans la couche de résine d'adhérence (7) couvrant la face du matériau stratifié et/ou **en ce que** le matériau stratifié (3) est construit sur un empilement fait d'une couche de fond sur une couche d'anti-adhérence, à elle-même appliquée sur la forme négative de l'élément à construire.

8. Elément de construction aéronautique comprenant un noyau alvéolé (4) situé entre un matériau stratifié intérieur (2) et un matériau stratifié extérieur (3), le noyau alvéolé (4) ayant plusieurs parois (8) formant des angles et de préférence des angles droits avec la surface des matériaux stratifiés, **caractérisé en ce qu'**un ménisque de fixation (5) formé par la résine d'adhérence (7) est situé dans la zone de contact entre la parois (8) du noyau alvéolé et le matériau stratifié intérieur ou extérieur (2, 3) et **en ce que** le noyau alvéolé (4) comprend de nombreuses alvéoles (6) soumises à une pression réduite de 0,7 bar à 0,9 bar pendant le durcissement pour atteindre une pression finale intérieure allant de 0,1 bar à 0,9 bar et **en ce que** le matériau stratifié extérieur (3) et le matériau stratifié intérieur (2) sont composés d'au moins trois couches de matrices en fibres et en particulier en fibres de verre ou en fibres de carbone.

9. Elément de construction aéronautique selon la revendication 8, à **caractérisé en ce que** le noyau alvéolé (4) est une couche alvéolée d'une épaisseur allant de préférence de 5 mm à 50 mm avec de nombreuses alvéoles (6) et/ou **en ce que** le noyau alvéolé est enfermé hermétiquement par la résine d'adhérence (7).

10. Elément de construction aéronautique selon une des revendications précédentes 8 et 9, **caractérisé en ce que** les alvéoles (6) possèdent des parois (8) en polyamide ou en fibres d'aramide imbibées de résine phényle et transformées en papier.

11. Elément de construction aéronautique selon une des revendications précédentes 8 à 10, **caractérisé en ce que** la résine d'adhérence (7) possède une autre couleur que celle du matériau stratifié et de préférence une couleur blanche.

12. Avion comportant une cabine pressurisée fabriquée au moins partiellement à partir d'un élément de construction aéronautique selon les revendications 8 à 11.
